# EUROPEAN PATENT APPLICATION

(11) **EP 4 603 218 A1**
(43) Date of publication of application: **20.08.2025**
(21) Application number: 22966502.1
(22) Date of filing: 24.11.2022
(51) Int. Cl.: B23B 51/06

(54) **DRILLING TOOL, BLANK FOR DRILLING TOOL, AND METHOD FOR MANUFACTURING BLANK FOR DRILLING TOOL**

(71) Applicant: OSG Corporation, Toyokawa-shi Aichi 442-0005 (JP)
(72) Inventor: SANADA, Koki, Aiko-gun, Kanagawa 243-0303 (JP); NAKAMURA, Ken, Aiko-gun, Kanagawa 243-0303 (JP); SAKODA, Kenichi, Aiko-gun, Kanagawa 243-0303 (JP)
(74) Representative: karo IP
(86) International application number: PCT/JP2022/043396
(87) International publication number: WO 2024/111092

(57) **Abstract**

A drilling tool includes: a core material; and an outer material located around the core material. An integrated hole is formed in the outer material, and when viewed from a distal end side in a longitudinal direction, the integrated hole has: an insertion area in which the core material is inserted; and an oil-hole area that communicates with the insertion area. An oil hole is defined by an outer periphery of the core material inserted in the insertion area and an edge of the oil-hole area of the outer material.

## Description

### FIELD

The present invention relates to a drilling tool, a blank for a drilling tool, and a manufacturing method for a blank for a drilling tool.

### BACKGROUND

PTLs 1 and 2 each disclose a drilling tool having opening(s) of oil hole(s) at the distal end.

### [CITATION LIST]

### [PATENT LITERATURE]

PTL 1: Japanese Patent Application Publication No. 2020-104253
PTL 2: Japanese Patent Application Publication No. 2011-020254

### SUMMARY

### [TECHNICAL PROBLEM]

Because the opening of an oil hole is located at the distal end of a drilling tool, it is difficult to form the oil hole with high accuracy in terms of its shape and position. Specifically, it is difficult to dispose the opening of an oil hole at a predetermined position in the distal end of a drilling tool when the drilling tool is completed, and to form the oil hole so that the oil hole does not bend or wind on its way to the opening.

Some embodiments of the present invention aim to dispose the opening of an oil hole accurately at a predetermined position and to reduce bending and winding of the oil hole on its way to the opening.

### [SOLUTION TO PROBLEM]

An aspect of the present invention is a drilling tool including: a core material; and an outer material located around the core material, an integrated hole being formed in the outer material, when viewed from a distal end side in a longitudinal direction, the integrated hole having: an insertion area in which the core material is inserted; and an oil-hole area that communicates with the insertion area, an oil hole being defined by an outer periphery of the core material inserted in the insertion area and an edge of the oil-hole area of the outer material.

An aspect of the present invention is a blank for a drilling tool, the blank including: a core material; and an outer material located around the core material, an integrated hole being formed in the outer material, when viewed from a distal end side in a longitudinal direction, the integrated hole having: an insertion area in which the core material is inserted, and an oil-hole area that communicates with the insertion area, an oil hole being defined by an outer periphery of the core material inserted in the insertion area and an edge of the oil-hole area of the outer material.

An aspect of the present invention is a manufacturing method for a blank for a drilling tool, the manufacturing method including: a step of forming a core material; a step of forming an outer material in which an integrated hole is formed, when viewed from a distal end side in a longitudinal direction, the integrated hole having an insertion area in which the core material is inserted, and an oil-hole area that communicates with the insertion area; and a step of defining an oil hole, by inserting the core material into the insertion area, by an outer periphery of the core material inserted in the insertion area and an edge of the oil-hole area of the outer material.

Other features of the present invention will become apparent from the following specification and drawings.

### [ADVANTAGEOUS EFFECT OF THE INVENTION]

According to some embodiments of the present invention, it is possible to dispose the opening of an oil hole accurately at a predetermined position and to reduce bending and winding of the oil hole on its way to the opening.

### BRIEF DESCRIPTION OF DRAWINGS

[FIG. 1] FIG. 1 is a side view of a drilling tool 10 according to the present embodiment.
[FIG. 2] FIG. 2 is a view of the drilling tool 10 according to the present embodiment when viewed from a distal end DE side in a longitudinal direction.
[FIG. 3] FIG. 3 is a cross-sectional view taken along the line A-A' in FIG. 1.
[FIG. 4] FIG. 4 is a cross-sectional view taken along the line A-A' in FIG. 1 with a core material 21 and an outer material 22 separated from each other, in which FIG. 4A is a view of the outer material 22, and FIG. 4B is a view of the core material 21.
[FIG. 5] FIG. 5 is a cross-sectional view of a drilling tool 10A according to a first modification taken along the line A-A'.
[FIG. 6] FIG. 6 is a diagram illustrating a drilling tool 10B according to a second modification, in which FIG. 6A is a cross-sectional view of the drilling tool 10B taken along the line A-A', and FIG. 6B is an enlarged view of a portion around an oil hole 14.
[FIG. 7] FIG. 7 is a diagram illustrating oil holes 14 of a blank 20 according to the present embodiment.
[FIG. 8] FIG. 8 is a diagram illustrating a marking portion 24 of the blank 20 according to the present embodiment, in which FIG. 8A is a diagram showing an overview of the marking portion 24, and FIG. 8B is a side view of the blank 20 according to the present embodiment.
[FIG. 9] FIG. 9 is a flowchart of a manufacturing procedure for the blank 20 according to the present embodiment.
[FIG. 10] FIG. 10 is a diagram illustrating a die 30 for an outer material 22, used in the manufacturing procedure for the blank 20 according to the present embodiment.
[FIG. 11] FIG. 11 is a diagram illustrating an integrated hole pin 33 of the die 30, in which FIG. 11A is a perspective view of the integrated hole pin 33, and FIG. 11B is a view of the integrated hole pin 33 when viewed from the distal end side.
[FIG. 12] FIG. 12 is a diagram showing how the core material 21 is inserted into the insertion area 25 of the integrated hole 27. FIG. 12A is a diagram showing a state before the core material 21 is inserted into the insertion area 25 of the integrated hole 27. FIG. 12B is a diagram showing a state where the core material 21 is being inserted on the way into the insertion area 25 of the integrated hole 27. FIG. 12C is a diagram showing a state after the core material 21 is inserted into the insertion area 25 of the integrated hole 27.
[FIG. 13] FIG. 13A is a diagram illustrating a die 30X used in a manufacturing procedure for a blank 20X according to a comparative example. FIG. 13B is a diagram of an example of the blank 20X formed using the die 30X when viewed from the distal end side.
[FIG. 14] FIG. 14 is a diagram illustrating a hole pin 33X of the die 30X, in which FIG. 14A is a perspective view of the hole pin 33X, and FIG. 14B is a view of the hole pin 33X when viewed from the distal end side.

### DESCRIPTION OF EMBODIMENTS

At least the following points will become apparent from the description of the specification and the accompanying drawings.

Hereinafter, preferred embodiments of the present invention will be described with reference to the drawings. Like reference signs denote the same or equivalent elements, components, and the like shown in the drawings, and redundant description will be omitted as needed.

### Present Embodiment

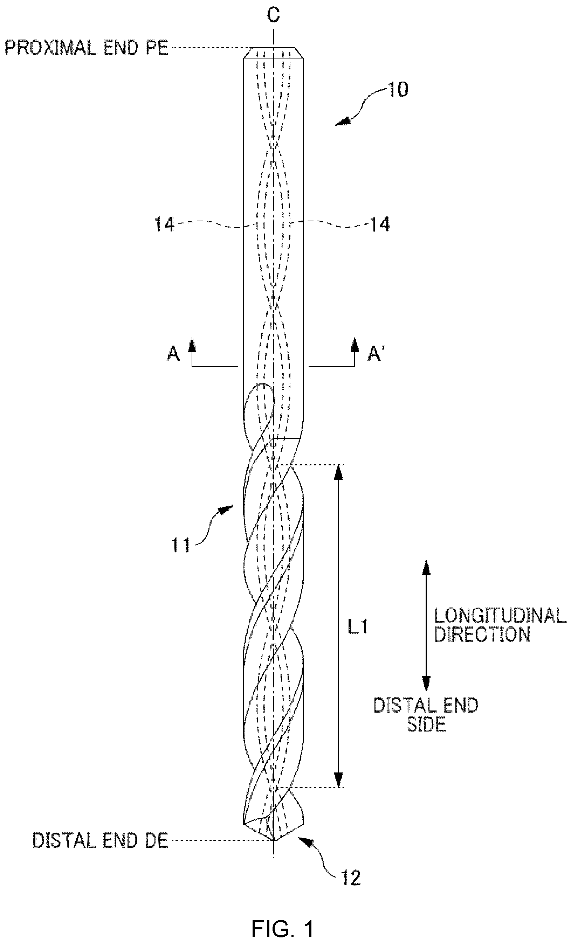

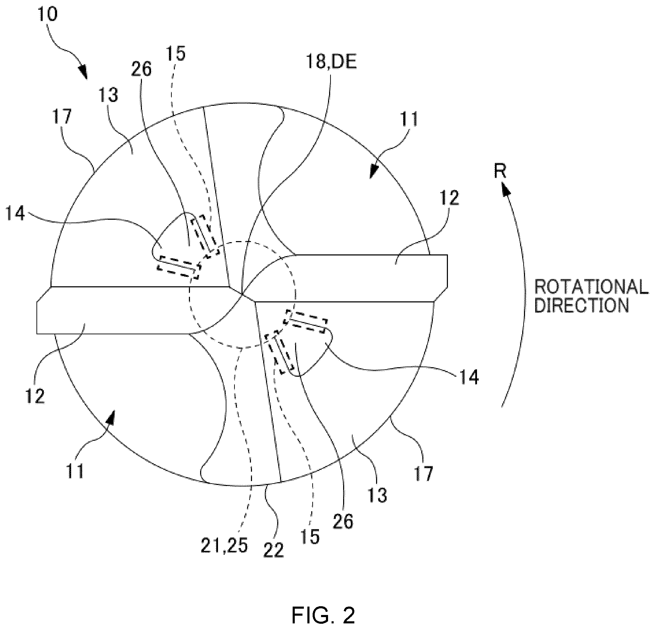

FIG. 1 is a side view of a drilling tool 10 according to the present embodiment. FIG. 2 is a view of the drilling tool 10 according to the present embodiment when viewed from a distal end DE side in a longitudinal direction.

### Definition of Directions, Terms, and Others

Initially, directions, terms, and others in the drilling tool 10 will be defined with reference to FIGS. 1 and 2.

The drilling tool 10 cuts a workpiece by rotating about a rotation axis C, thereby forming a machined hole. As shown in FIG. 1, **a** direction along the rotation axis C is defined as a "longitudinal direction".

As shown in FIG. 2, when the drilling tool 10 is viewed from the distal end DE side, a direction R in which the drilling tool 10 rotates about the rotation axis C is defined as a "rotation direction".

The distal end DE of the drilling tool 10 is an end that machines a workpiece (workpiece), of both ends, in the longitudinal direction, of the drilling tool 10. As shown in FIG. 2, the distal end DE is located at a center 18 of the drilling tool 10 and is located on the rotation axis C.

The above-described definitions of directions, terms, and the like are common to other embodiments of the specification unless otherwise specified. For example, the above-described directions, terms, and the like in the drilling tool 10 are also the same in a blank 20 for the drilling tool 10 (described later) .

### Overview of Drilling Tool 10

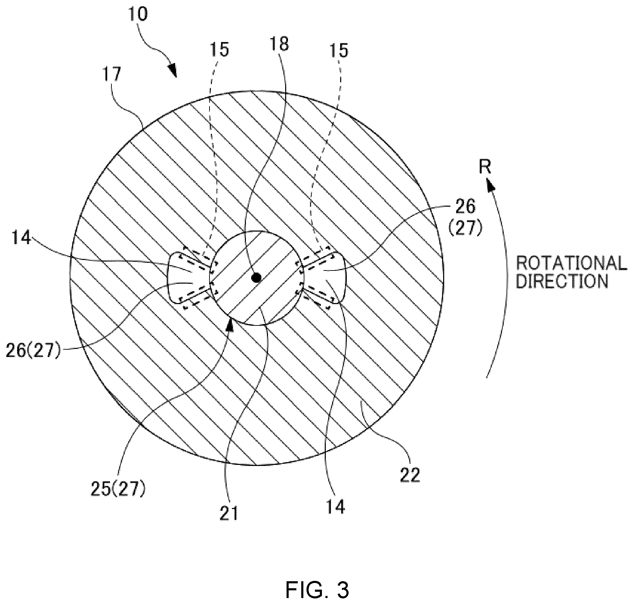

Next, an overview of the drilling tool 10 according to the present embodiment will be described with reference to FIGS. 1 and 2 again and additionally with reference to FIGS. 3 to 4B.

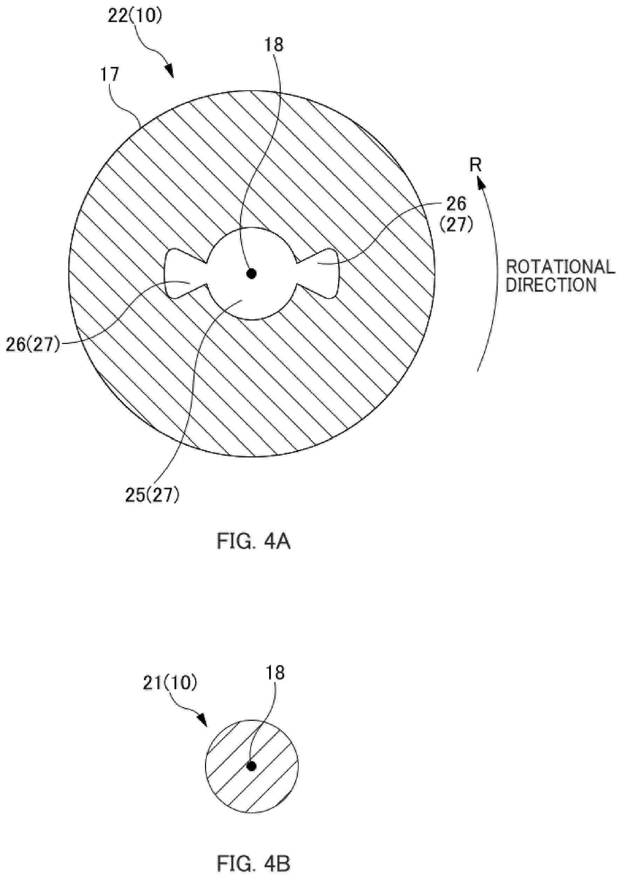

FIG. 3 is a cross-sectional view taken along the line A-A' in FIG. 1. FIG. 4 is a cross-sectional view taken along the line A-A' in FIG. 1 with a core material 21 and an outer material 22 separated from each other. FIG. 4A is a view of the outer material 22, and FIG. 4B is a view of the core material 21.

The drilling tool 10 can rotate about the rotation axis C to allow a cutting part to cut a workpiece to form a hole. The drilling tool 10 according to the present embodiment is a drill. However, the drilling tool 10 may be a tap, a thread mill or the like, that is, a drilling tool other than a drill. The drilling tool 10 is attached to a machine tool or the like via a holder (not shown) or the like and can form a machined hole in the workpiece by rotating about the rotation axis C.

The diameter, on the distal end DE side, of the drilling tool 10 according to the present embodiment shown in FIG. 2, that is, the drill diameter of the drilling tool 10, is in the range of, for example, φ1.0 mm to φ3.0 mm. However, the drill diameter of the drilling tool 10 may be in a range other than the range of φ1.0 mm to φ3.0 mm.

The drilling tool 10 according to the present embodiment is constituted by two components, that is, the core material 21 and the outer material 22, as shown in FIG. 2. However, the drilling tool 10 may further include components other than the core material 21 and the outer material 22.

The core material 21 is a component located on the center 18 side, of the two components that constitute the drilling tool 10. The core material 21 is formed such that the outer shape of its cross section is substantially a circular shape, as shown in FIG. 4B. The outer diameter of the core material 21 is formed so as to be equal to or smaller than the hole diameter of the outer material 22. This allows the core material 21 to be inserted into an insertion area 25 (described later) of an integrated hole 27 formed in the outer material 22.

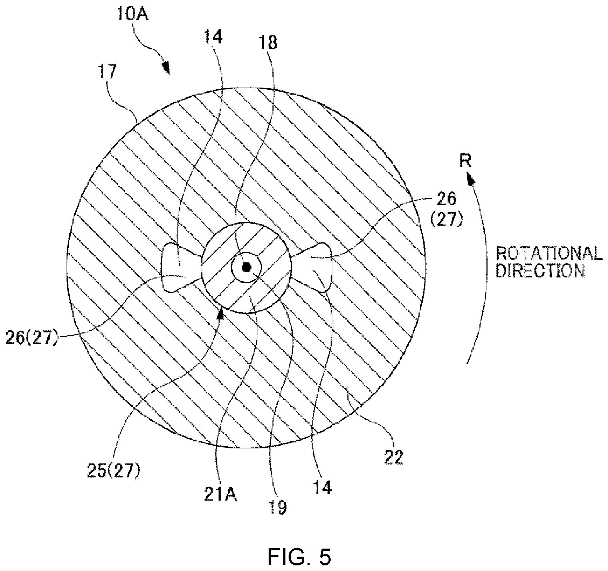

The core material 21 is a solid material (a component filled inside) as shown in FIG. 4B. However, the core material 21 may also be a hollow material (a component having a cavity inside). For example, in a later-described drilling tool 10A according to a first modification shown in FIG. 5, a core material 21A is a hollow material, and a cavity (oil hole 19) is formed inside the core material 21A.

The core material 21 may be formed such that the outer shape of its cross section is a shape other than a substantially circular shape. The core material 21 may be formed such that the outer shape of its cross section is a shape, such as an ellipse, a quadrangle, and a polygon. In this case, the core material 21 only needs to have a shape that makes the core material 21 possible to be inserted into the insertion area 25 (described later) of the integrated hole 27 formed in the outer material 22 and to be joined to the outer material 22.

The outer material 22 is a component located around the core material 21 and is formed such that the outer shape of the cross section is substantially a circular shape, as shown in FIG. 4A. An outer periphery 17 of the outer material 22 is also the outer periphery 17 of the drilling tool 10 (and the later-described blank 20). In the drilling tool 10 according to the present embodiment, as will be described later, the core material 21 is inserted into a part of the integrated hole 27 (i.e., insertion area 25) formed in the outer material 22, and the core material 21 and the outer material 22 are joined to each other.

In the outer material 22, the integrated hole 27 is formed as shown in FIGS. 3 and 4A. The integrated hole 27 has the insertion area 25 and oil-hole areas 26. The insertion area 25 is an area, of the integrated hole 27, into which the core material 21 is inserted. Furthermore, the oil-hole areas 26 are each an area, of the integrated hole 27, that communicates with the insertion area 25.

As shown in FIG. 4A, the oil-hole areas 26 are located closer to the outer periphery 17 than the insertion area 25 is, and communicate with the insertion area 25. As shown in FIG. 3, when the core material 21 is inserted in the insertion area 25, oil holes 14 (described later) each are defined by an edge of the oil-hole area 26 and a part of the outer periphery of the core material 21 which is located at a portion where the insertion area 25 and the oil-hole area 26 communicate with each other.

In the drilling tool 10 according to the present embodiment, with the oil-hole areas 26 communicating with the insertion area 25, it is possible to suppress cracking of the core material 21 or the outer material 22 when the core material 21 is inserted into the insertion area 25. In cases where the core material 21 is inserted into a hole not having oil-hole areas 26 (that is, a hole having only the insertion area 25), if the clearance between the core material 21 (specifically, the outer periphery of the core material 21) and the outer material 22 (specifically, the edge of the insertion area 25) is small, a high load is applied to the core material 21 or the outer material 22, which can cause cracking.

The outer material 22 according to the present embodiment has room to allow the insertion area 25 to deform in such a manner that the insertion area 25 expands, by the oil-hole areas 26 spreading toward the outer periphery 17 when inserting the core material 21 into the insertion area 25. Therefore, even in cases where the clearance between the core material 21 and the outer material 22 is small, the oil-hole areas 26 serve as slits that absorb the shortage of clearance, making it possible to suppress the occurrence of cracks in the core material 21 or the outer material 22.

In the drilling tool 10 according to the present embodiment, the core material 21 and the outer material 22 are each made of a cemented carbide composed of a material containing tungsten carbide (WC) and cobalt (Co).

However, the core material 21 and the outer material 22 may be made of a material other than a cemented carbide. Here, the core material 21 and the outer material 22 are formed by extrusion as will be described later. Therefore, it is sufficient that the material of each of the core material 21 and the outer material 22 is a material that can be formed by extrusion.

Moreover, the core material 21 and the outer material 22 are not limited to being made of the same MATERIAL and are respectively made of MATERIALS that are different from each other. With the cemented carbide used in the drilling tool 10 according to the present embodiment, the core material 21 can be made of a MATERIAL having an excellent toughness and the outer material 22 can be made of a MATERIAL having an excellent wear resistance.

Furthermore, the core material 21 and the outer material 22 are not limited to being made of the same material, that is, a cemented carbide, and may be respectively made of materials that are different from each other. For example, a configuration is acceptable in which the core material 21 is made of a cemented carbide and the outer material 22 is made of a material other than a cemented carbide, or a configuration is acceptable in which the core material 21 is made of a material other than a cemented carbide and the outer material 22 is made of a cemented carbide.

As shown in FIGS. 1 and 2, the drilling tool 10, in which the core material 21 and the outer material 22 are joined to each other, has flutes 11, cutting edges 12, flanks 13, and oil holes 14.

The flute 11 is a groove for removing chips from a machined surface during machining of a workpiece. In the drilling tool 10 according to the present embodiment, as shown in FIGS. 1 and 2, two flutes 11 are formed. Each of the two flutes 11 is formed helically along the rotation axis C on the outer periphery 17. However, the drilling tool 10 may have three or more multiple flutes 11 or may have only one flute 11.

As shown in FIG. 1, the lead of the flute 11 formed helically is denoted by L1. Here, the term "lead" refers to the distance that a certain portion of the helical shape advances in the longitudinal direction when the portion rotates once in the rotation direction R. In the drilling tool 10 according to the present embodiment, the flutes 11 are formed such that the lead L1 is constant.

The drilling tool 10 according to the present embodiment is a so-called two-flute drill with two cutting edges 12. However, the drilling tool 10 may have three or more cutting edges 12 or may have only one cutting edge 12.

The oil hole 14 is a hole for circulating cutting oil to the distal end DE side of the drilling tool 10. Chips generated during machining flow through the flute 11 together with the cutting oil flowing out from the oil hole 14 and are smoothly discharged. The number of oil holes 14 corresponds to the number of cutting edges 12 and may be one or may be three or more.

In the present embodiment, each of the two oil holes 14 is formed helically along the longitudinal direction as shown in FIG. 1. The flutes 11 of the drilling tool 10 are formed helically along the respective two oil holes 14.

In the present embodiment, the oil hole 14 has a tapered portion 15 when viewed from the distal end DE side in the longitudinal direction of the drilling tool 10. The tapered portion 15 is formed such that the width narrows (tapers) from the outer periphery 17 toward the center 18 in the longitudinal direction.

However, the oil hole 14 may have a shape other than a shape the width of which narrows (tapers) toward the center 18 and may be, for example, a substantially circular shape. In the following description, an oil hole 14 that has a shape other than a substantially circular shape, including a shape the width of which narrows (tapers) toward the center 18 can be referred to as a "non-circular" oil hole 14.

In the drilling tool 10 according to the present embodiment, the two oil holes 14 are positioned so as to be rotationally symmetric about the center 18 of the drilling tool 10 when viewed from the distal end DE side in the longitudinal direction as shown in FIG. 2. This allows cutting oil to be uniformly supplied to the machined surface. However, in cases where a decrease in cutting edge strength of the cutting edge 12 is within an acceptable range, the two oil holes 14 do not need to be positioned so as to be rotationally symmetric about the center 18 of the drilling tool 10.

### Oil Hole 14

Incidentally, the opening of each oil hole 14 is located at the distal end DE of the drilling tool 10. The distal end DE of the drilling tool 10 narrows as the drill diameter reduces, so it may be difficult to dispose the opening of the oil hole 14 accurately at a predetermined position or to reduce bending and winding of the oil hole 14 on its way to the opening. In cases of a non-circular oil hole 14 like the oil hole 14 of the drilling tool 10 according to the present embodiment, it is particularly difficult to form the oil hole 14 with high accuracy in terms of not only the position of the opening but also its shape.

Therefore, in the drilling tool 10 according to the present embodiment, by forming the integrated hole 27 larger than the oil hole 14 (that is, the integrated hole 27 having the insertion area 25 and the oil-hole areas 26) in the outer material 22, it is possible to easily ensure the accuracy of the shape and position of the integrated hole 27. Then, the oil holes 14 are defined by inserting the core material 21 into a part of the integrated hole 27 (that is, the insertion area 25) whose shape accuracy and positional accuracy have been ensured. Each of the oil holes 14 is specifically defined by the outer periphery of the core material 21 inserted in the insertion area 25 and the edge of the oil-hole area 26 of the outer material 22. As a result, in the drilling tool 10 according to the present embodiment, it is possible to dispose the opening of the oil hole 14 accurately at a predetermined position and to reduce bending and winding of the oil hole 14 on its way to the opening. Furthermore, the oil hole 14 can be formed so as to accurately conform to the lead L1 of the flute 11.

### Modifications

FIG. 5 is a cross-sectional view of the drilling tool 10A according to a first modification taken along the line A-A'.

The drilling tool 10 according to the present embodiment described above has only the oil holes 14 each defined by the outer periphery of the core material 21 inserted in the insertion area 25 and the edge of the oil-hole area 26 of the outer material 22. However, the configuration of the oil hole is not limited to that of the drilling tool 10 shown in FIGS. 1 to 4B. In the drilling tool 10A according to the first modification shown in FIG. 5, in addition to the oil holes 14, the core material 21A has another oil hole 19. Thus, the supply amount of cutting oil to a machined surface can be increased.

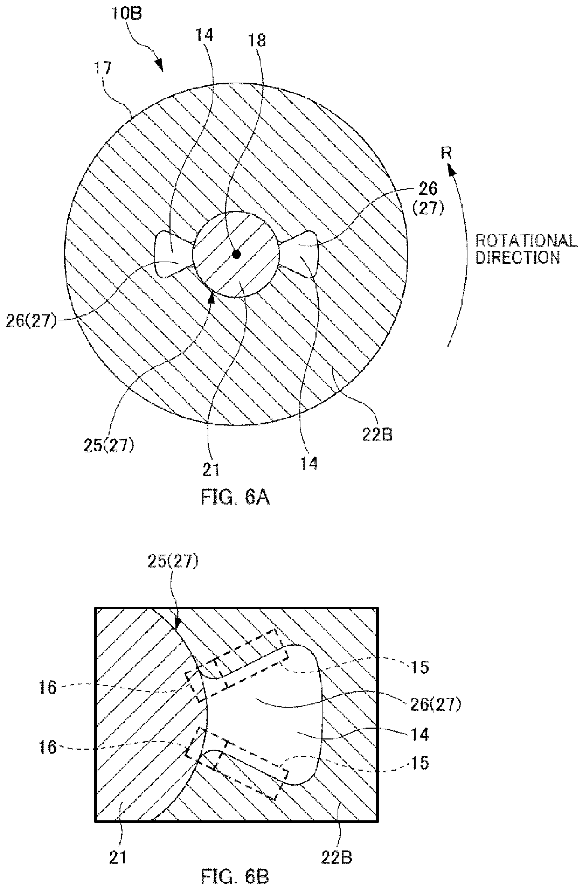

FIG. 6 is a diagram illustrating a drilling tool 10B according to a second modification. FIG. 6A is a cross-sectional view of the drilling tool 10B taken along the line A-A', and FIG. 6B is an enlarged view of a portion around the oil hole 14.

In the drilling tool 10B according to the second modification shown in FIGS. 6A and 6B, each of the oil holes 14 formed in an outer material 22B further has widened portions 16. When viewed from the distal end DE side in the longitudinal direction as shown in FIG. 6A, each of the widened portion 16 is a portion that is located closer to the center 18 than the tapered portion 15 is and in which the width of the oil hole 14 widens toward the center 18. Since each of the oil holes 14 formed in the outer material 22B further has the widened portion 16, it is possible to increase the supply amount and pressure of cutting oil even in the center 18-side area of the oil hole 14 where the width is narrowed.

### Blank 20 for Drilling Tool 10

Hereinafter, a blank 20 for the drilling tool 10, which is in a state before the flutes 11 and the cutting edges 12 of the drilling tool 10 are formed, will be described.

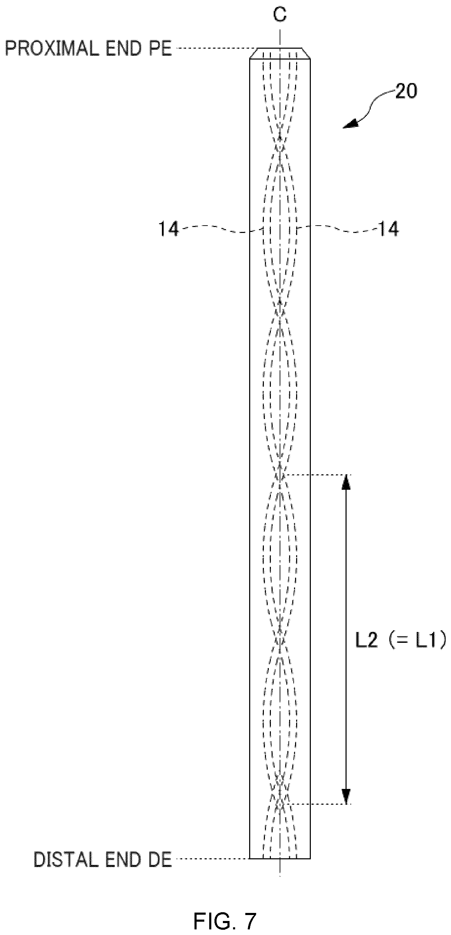

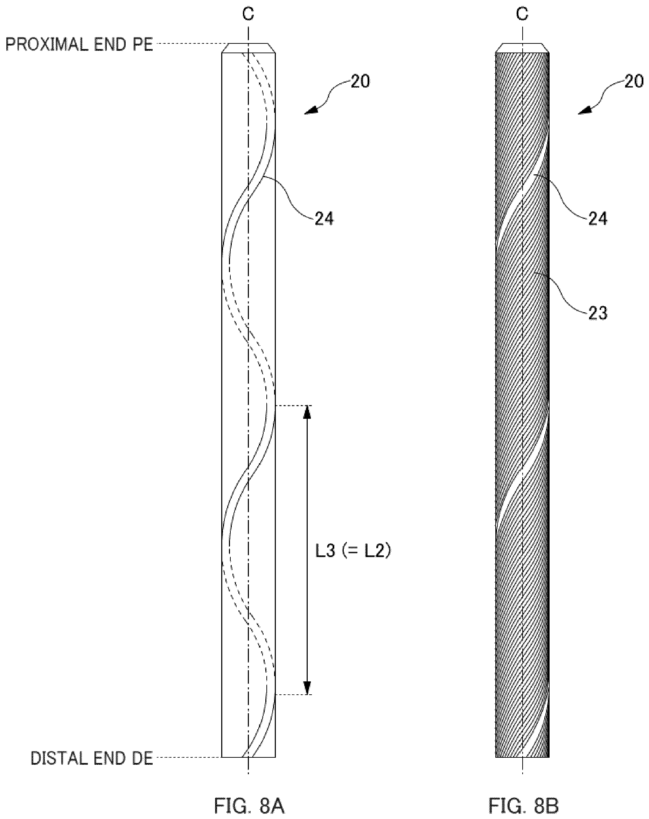

FIG. 7 is a diagram illustrating the oil holes 14 of the blank 20 according to the present embodiment. FIG. 8 is a diagram illustrating a marking portion 24 of the blank 20 according to the present embodiment. FIG. 8A is a diagram showing an overview of the marking portion 24, and FIG. 8B is a side view of the blank 20 according to the present embodiment.

For the drilling tool shown in FIGS. 1 to 6B described above, the blank 20 described below is initially manufactured, and then the flutes 11 along the leads (described later) of the oil holes 14 and the cutting edges 12 at the distal end are formed.

As shown in FIG. 7, the lead of each oil hole 14 formed helically is denoted by L2. The blank 20 according to the present embodiment is formed so that the lead L1 (see FIG. 1) of the flute 11 when manufactured as the drilling tool 10 is equal to the lead L2 of the oil hole 14 (L1 = L2).

The marking portion 24 is formed on the outer periphery of the blank 20 according to the present embodiment, as shown in FIG. 8A. The marking portion 24 is a portion that functions as an indication line when forming the flute 11. The marking portion 24 is formed helically on the outer periphery of the blank 20. In the blank 20 according to the present embodiment, as shown in FIG. 8B, outer peripheral grooves 23 with the equal helix angle to the marking portion 24 are formed in a portion of the outer periphery 17 of the blank 20 other than the marking portion 24. Therefore, the marking portion 24 can be visually recognized as a portion where these outer peripheral grooves 23 are not formed. However, the marking portion 24 is not limited to the configuration shown in FIG. 8B, and may be, for example, a colored portion.

As shown in FIG. 8A, the lead of the marking portion 24 formed helically is denoted by L3. In the blank 20 according to the present embodiment, the marking portion 24 is formed so that the lead L3 is equal to the lead L2 of the oil hole 14 (see FIG. 5) (L3 = L2). This makes it possible to easily equalize the lead L1 of the flute 11 that is formed helically in accordance with the marking portion 24, to the lead L2 of the oil hole 14 (L1 = L2). In other words, the opening of the oil hole 14 can be formed accurately on the flank 13 at the distal end DE of the drilling tool 10. The flute 11, the oil hole 14 and the marking portion 24 are formed so that the lead L1 of the flute 11, the lead L2 of the oil hole 14, and the lead L3 of the marking portion 24 are equal to one another.

### Overview of Manufacturing Procedure for Blank 20

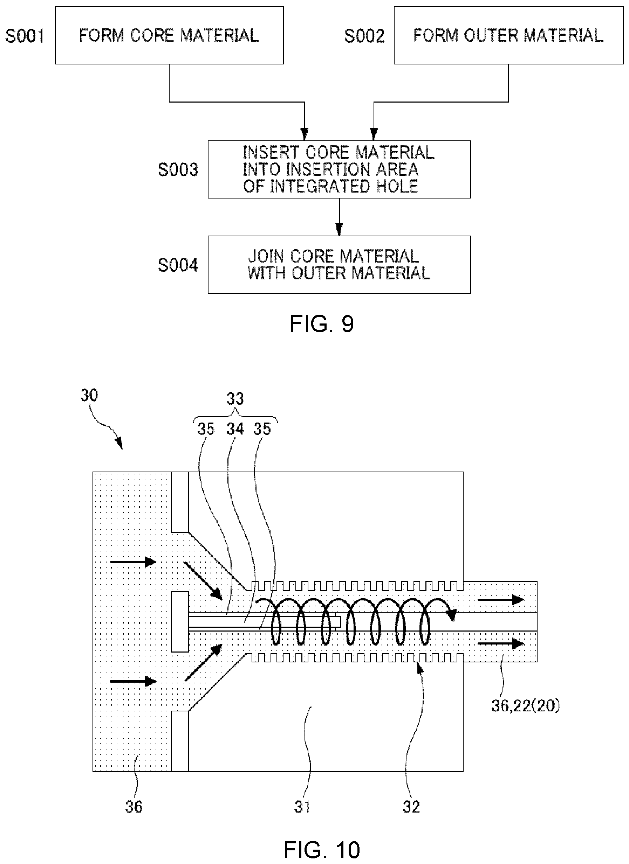

FIG. 9 is a flowchart of the manufacturing procedure for the blank 20 according to the present embodiment.

In the manufacturing procedure for the blank 20 according to the present embodiment, initially, the core material 21 is formed (S001), and the outer material 22 is formed (S002). To form the core material 21, specifically, powders of the materials of the core material 21 (here, tungsten carbide (WC) and cobalt (Co)) are mixed and extruded with a die (not shown). As a result, the core material 21 is formed into a shape as shown in FIG. 4B (a shape in which the outer shape of the cross section is substantially a circular shape) and then sintered.

To form the outer material 22, specifically, similar to the formation of the core material 21, powders of the materials of the outer material 22 (here, tungsten carbide (WC) and cobalt (Co)) are mixed and extruded with a die 30 shown in FIG. 10 (described later). As a result, the outer material 22 is formed into a shape as shown in FIG. 4A (a shape in which the outer shape of the cross section is substantially a circular shape). Furthermore, in the outer material 22, the integrated hole 27 having the insertion area 25 and the oil-hole areas 26 is formed by extrusion with the die 30.

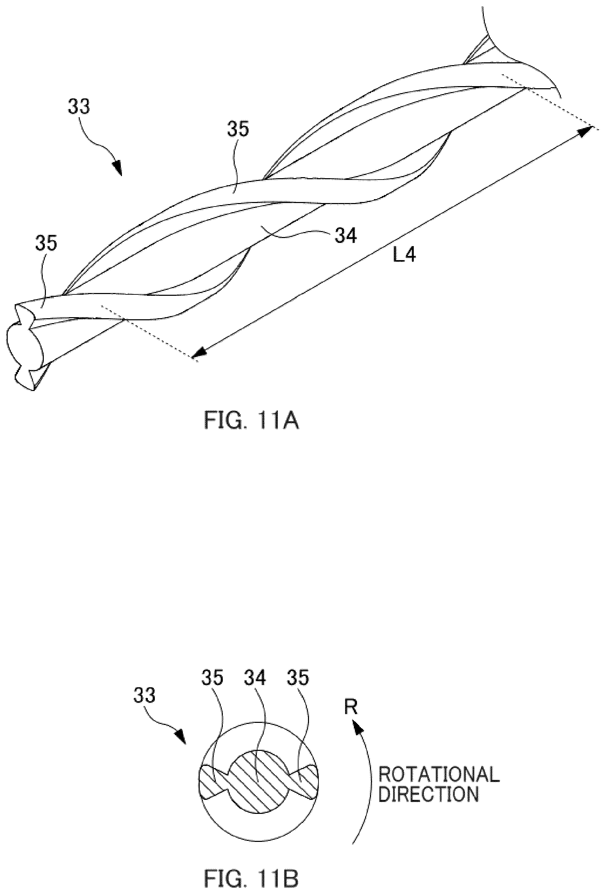

FIG. 10 is a diagram illustrating the die 30 for the outer material 22, used in the manufacturing procedure for the blank 20 according to the present embodiment. The die 30 includes an extrusion portion 31 and an integrated hole pin 33, as shown in FIG. 10. FIG. 11 is a diagram illustrating the integrated hole pin 33 of the die 30. FIG. 11A is a perspective view of the integrated hole pin 33, and FIG. 11B is a view of the integrated hole pin 33 when viewed from the distal end side.

The extrusion portion 31 is a component through which powder 36 that is the material of the outer material 22 passes. The extrusion portion 31 has a substantially circular cross section and can form the outer shape of the cross section of the outer material 22 into a substantially circular shape by the powder 36 being extruded through the extrusion portion 31 from the left side to the right side in FIG. 10.

A groove forming portion 32 is formed on the inner surface of the extrusion portion 31. The groove forming portion 32 is a portion for forming the outer peripheral grooves 23 and the marking portion 24 on the outer periphery 17 of the outer material 22 (blank 20). Here, the grooves of the groove forming portion 32 are formed as helical grooves with the same helix angle as the outer peripheral grooves 23.

In the manufacturing procedure for the blank 20 according to the present embodiment, the powder 36 will be extruded from the left side to the right side in FIG. 10 while rotating in the extrusion portion 31. Thus, while extruding the outer material 22, the outer peripheral grooves 23 can be formed on the outer periphery 17 of the outer material 22 (blank 20). Although not shown in FIG. 10, the portion corresponding to the marking portion 24 has no groove forming portion 32, thus forming the marking portion 24.

The integrated hole pin 33 is a component for forming the integrated hole 27 of the outer material 22 during extrusion of the outer material 22. The integrated hole pin 33 is formed in a pin (rod) shape and is disposed inside the extrusion portion 31. The integrated hole pin 33 is disposed conforming to the extrusion direction of the powder 36 (that is, the longitudinal direction of the blank 20). As a result, when the powder 36 is extruded while rotating in the extrusion portion 31, the integrated hole 27 is formed in the portion through which the integrated hole pin 33 passes.

The integrated hole pin 33 has an insertion pin 34 and oil-hole pins 35, as shown in FIGS. 10 to 11B. The insertion pin 34 is a component for forming the insertion area 25. The oil-hole pins 35 are components for forming the oil-hole areas 26. In the present embodiment, the insertion pin 34 and the oil-hole pins 35 are connected. Here, "connect" may indicate a configuration in which the insertion pin 34 and the oil-hole pins 35 are integrally formed or may indicate a configuration in which the insertion pin 34 and the oil-hole pins 35 are separate and partially connected.

In the present embodiment, by using the integrated hole pin 33 in which the insertion pin 34 and the oil-hole pins 35 are connected, the rigidity of the integrated hole pin 33 can be maintained during extrusion, and the integrated hole 27 can be formed with high accuracy in terms of shape and position.

The insertion pin 34 is formed so as to extend parallel to the longitudinal direction of the drilling tool 10 to be manufactured (that is, the longitudinal direction of the blank 20 to be manufactured), as shown in FIG. 11A. The oil-hole pins 35 are formed so as to helically wind around the outer periphery of the insertion pin 34. As a result, the integrated hole 27 is formed along the rotation axis C such that the oil-hole areas 26 helically wind around the insertion area 25.

The outer material 22 extruded by the die 30 is sintered in a subsequent step. Here, in the manufacturing procedure for the blank 20 according to the present embodiment, the outer material 22 is not completely sintered unlike the core material 21 and is in a semi-sintered state.

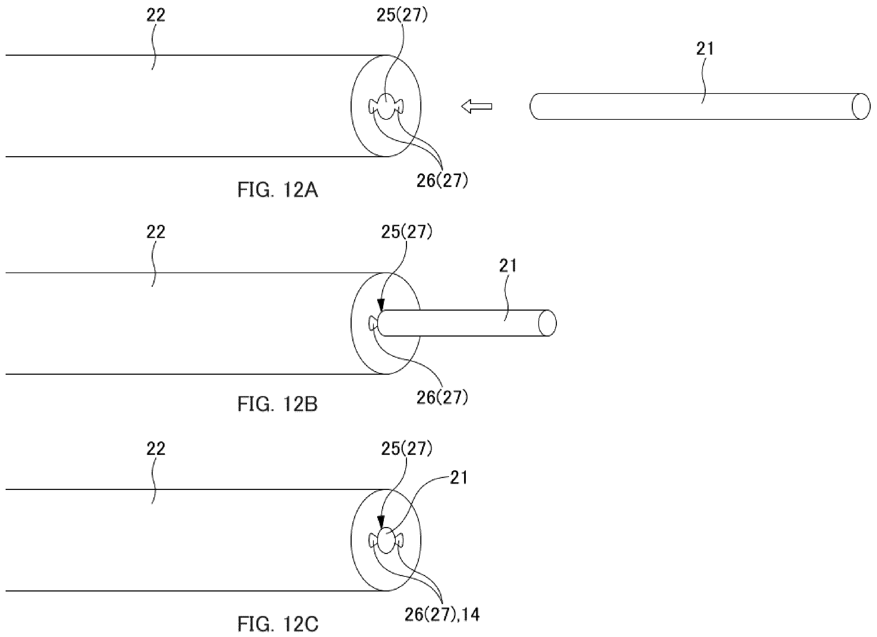

Subsequently, the core material 21 is inserted into the insertion area 25 as shown in FIGS. 12A to 12C (described later) (S003 in FIG. 9). As a result, each of the oil holes 14 is defined by the outer periphery of the core material 21 inserted in the insertion area 25 and the edge of the oil-hole area 26 of the outer material 22.

FIG. 12 is a diagram showing how the core material 21 is inserted into the insertion area 25 of the integrated hole 27. FIG. 12A is a diagram showing a state before the core material 21 is inserted into the insertion area 25 of the integrated hole 27. FIG. 12B is a diagram showing a state where the core material 21 is being inserted on the way into the insertion area 25 of the integrated hole 27. FIG. 12C is a diagram showing a state after the core material 21 is inserted into the insertion area 25 of the integrated hole 27.

In the present embodiment, when inserting the core material 21 into the insertion area 25, the oil-hole areas 26 communicating with the insertion area 25 spread toward the outer periphery 17, thereby the insertion area 25 can be expanded. Therefore, even in cases where the clearance between the core material 21 and the outer material 22 is small, it suppresses application of a high load to the core material 21 or the outer material 22, making it possible to suppress the occurrence of cracks. Accordingly, in a subsequent step, optimal joining of the core material 21 to the outer material 22 can be achieved.

Finally, the core material 21 and the outer material 22 are joined to each other (S004 in FIG. 9 described above).

As described above, the outer material 22 in the step after extrusion is in a semi-sintered state. On the other hand, the core material 21 is completely sintered. In this way, in the present embodiment, the completely-sintered core material 21 is inserted in the outer material 22 that is in a semi-sintered state. In this step, the outer material 22 will also be completely sintered by further sintering the whole of the core material 21 and the outer material 22. As a result, the core material 21 and the outer material 22 are joined to each other.

Here, generally, a component will shrink due to sintering, so when the whole of the core material 21 and the outer material 22 is sintered, both the core material 21 and the outer material 22 will shrink. However, the core material 21 is already completely sintered, while the outer material 22 in a semi-sintered state becomes sintered completely. Therefore, the outer material 22 will shrink more compared to the core material 21. In other words, the outer material 22 differs from the core material 21 in degree of shrinkage. In this step, the outer material 22 will shrink in a direction in which it tightens the core material 21 from the outside, so the core material 21 and the outer material 22 can be joined more firmly.

In addition, the materials of the core material 21 and the outer material 22 of the blank 20 according to the present embodiment contain cobalt (Co). Therefore, during sintering in this step, Co partially dissolves, which makes it easier for the core material 21 and the outer material 22 to be joined together.

In step S001, the core material 21 may be in a semi-sintered state, and accordingly, in this step, the whole of the core material 21 and the outer material 22 may be completely sintered by inserting the core material 21 in a semi-sintered state into the outer material 22 in a semi-sintered state. However, as described above, when a component is completely sintered from the semi-sintered state, the component will further shrink. For this reason, the accuracy of the shape and position of the oil holes 14 can be lower than the case of the present embodiment in which the core material 21 has been completely sintered. Therefore, it is preferable that the completely-sintered core material 21 is inserted into the outer material 22 that is in a semi-sintered state and only the outer material 22 is completely sintered in this step, as in the present embodiment.

### Manufacturing Procedure for Blank 20X according to Comparative Example

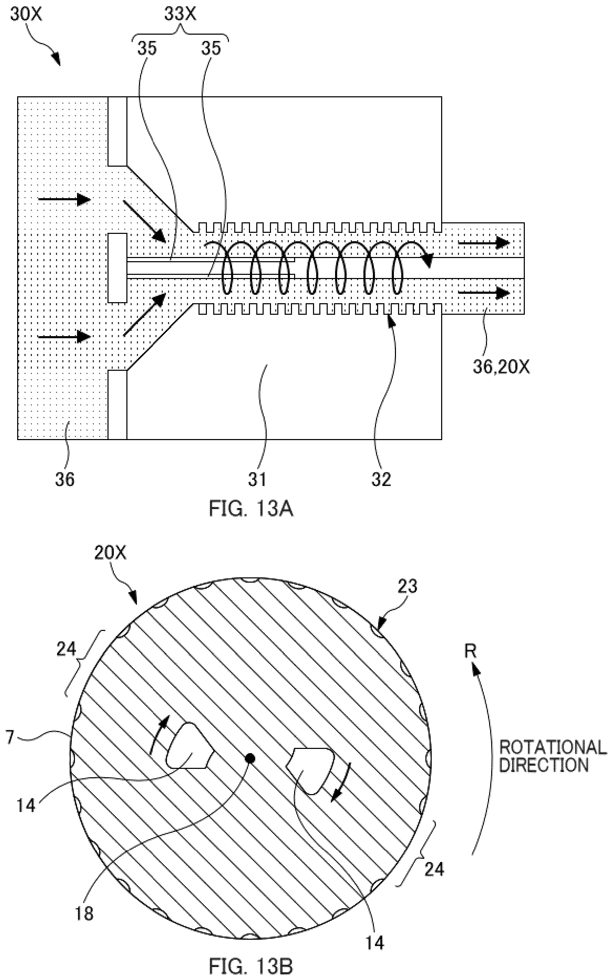

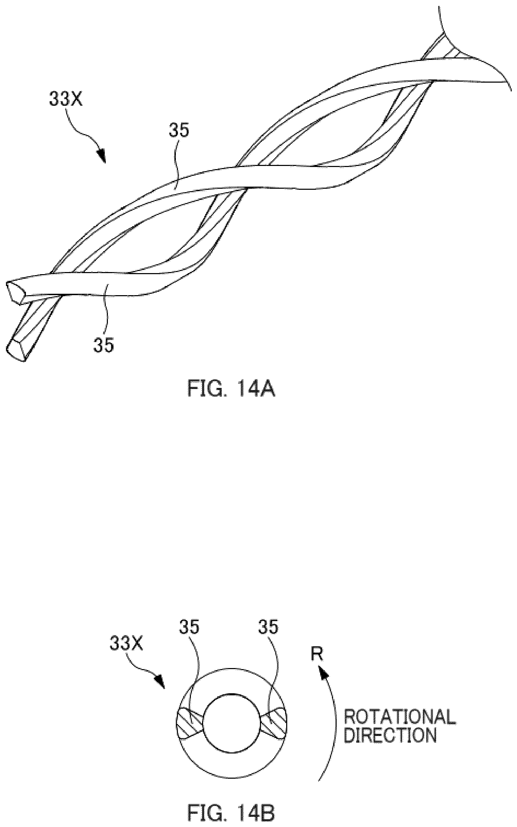

FIG. 13A is a diagram illustrating a die 30X used in a manufacturing procedure for a blank 20X according to a comparative example. FIG. 13B is a diagram of an example of the blank 20X formed using the die 30X when viewed from the distal end side. FIG. 14 is a diagram illustrating a hole pin 33X of the die 30X. FIG. 14A is a perspective view of the hole pin 33X, and FIG. 14B is a diagram of the hole pin 33X when viewed from the distal end side.

In the present embodiment, the two components, that is, the core material 21 and the outer material 22, are formed separately, and in a subsequent step, the core material 21 and the outer material 22 are joined to each other, to manufacture the blank 20. However, in the blank 20X according to the comparative example, one component corresponding to both the core material 21 and the outer material 22 directly has oil holes 14.

The die 30X used in the manufacturing procedure for the blank 20X according to the comparative example has an extrusion portion 31 and the hole pin 33X. The extrusion portion 31 is similar to the extrusion portion 31 of the die 30 according to the present embodiment. The hole pin 33X, unlike the die 30 according to the present embodiment, has no insertion pin 34 and only has oil-hole pins 35.

The oil-hole pins 35, as described above, are formed very thin and are not connected to the insertion pin 34, so the rigidity is low. For this reason, as shown in FIG. 13A, when the powder 36 passes through the hole pin 33, it can cause a displacement of the oil-hole pins 35. As a result, in the extruded blank 20X, the positions of the oil holes 14 can be displaced, as shown in FIG. 13B. In this comparative example, when the powder 36 is extruded while rotating in the extrusion portion 31, the displacement of the oil-hole pins 35 having low rigidity is more likely to occur. Therefore, it is difficult to form the openings of the oil holes 14 with high accuracy in terms of shape and position, in the manufacturing procedure for the blank 20X according to the comparative example.

In contrast, in the present embodiment, since the integrated hole pin 33 in which the insertion pin 34 and the oil-hole pins 35 are connected is used, it is possible to form the integrated hole 27 with high accuracy in terms of shape and position. In other words, it is possible to form the openings of the oil holes 14 with high accuracy in terms of shape and position.

### Abridgment

According to the present specification, a drilling tool 10 according to the following aspects is provided.

### (Aspect 1)

Aspect 1 includes: a core material 21; and an outer material 22 located around the core material 21, an integrated hole 27 being formed in the outer material 22, when viewed from a distal end DE side in a longitudinal direction, the integrated hole 27 having: an insertion area 25 in which the core material 21 is inserted; and an oil-hole area 26 that communicates with the insertion area 25, an oil hole 14 being defined by an outer periphery of the core material 21 inserted in the insertion area 25 and an edge of the oil-hole area 26 of the outer material 22.

With the above aspect, it is possible to dispose the opening of the oil hole 14 accurately at a predetermined position and to reduce bending and winding of the oil hole 14 on its way to the opening.

### (Aspect 2)

In Aspect 2, the core material 21 and the outer material 22 are respectively made of materials that are different from each other.

With the above aspect, it is possible to improve the degree of freedom in selecting a material used for the drilling tool 10.

### (Aspect 3)

In Aspect 3, the oil hole 14 is formed helically along the longitudinal direction.

With the above aspect, it is possible to form the oil hole 14 conforming to the shape of the flute 11 formed helically.

### (Aspect 4)

In Aspect 4, the oil hole 14 has the tapered portion 15 in which the width of the oil hole 14 narrows from the outer periphery 17 toward the center 18 when viewed from the distal end DE side in the longitudinal direction.

With the above aspect, the oil hole 14 can be efficiently disposed by the flute 11 and a cutting edge 12 being disposed radially from the center 18 when viewed from the distal end DE side in the longitudinal direction of the drilling tool 10.

### (Aspect 5)

In Aspect 5, the oil hole 14 has a widened portion 16 that is located closer to the center 18 than the tapered portion 15 is when viewed from the distal end DE side in the longitudinal direction, and in which the width of the oil hole 14 widens toward the center 18 when viewed from the distal end DE side in the longitudinal direction.

With the above aspect, it is possible to increase the supply amount and pressure of cutting oil even in the center 18-side area of the oil hole 14 where the width is narrowed.

### (Aspect 6)

In Aspect 6, the plurality of the oil holes 14 are provided, and the plurality of oil holes 14 are positioned so as to be rotationally symmetric about the center 18 when viewed from the distal end DE side in the longitudinal direction.

With the above aspect, it is possible to uniformly supply cutting oil to a machined surface.

### (Aspect 7)

In Aspect 7, the core material 21 has another oil hole 19.

With the above aspect, the supply amount of cutting oil to a machined surface can be increased.

According to the specification, a blank 20 for the drilling tool 10 according to the following aspect is provided.

### (Aspect 8)

Aspect 8 includes: the core material 21; and the outer material 22 located around the core material 21, the integrated hole 27 being formed in the outer material 22, when viewed from a distal end DE side in a longitudinal direction, the integrated hole 27 having: the insertion area 25 in which the core material is inserted, and the oil-hole area 26 that communicates with the insertion area 25, the oil hole 14 being defined by the outer periphery of the core material 21 inserted in the insertion area 25 and an edge of the oil-hole area 26 of the outer material 22.

With the above aspect, it is possible to dispose the opening of the oil hole 14 with a high accuracy in terms of a predetermined position and to reduce bending and winding of the oil hole 14 on its way to the opening.

According to the specification, a manufacturing method for a blank 20 for a drilling tool 10, according to the following aspects, is provided.

### (Aspect 9)

Aspect 9 includes a step of forming the core material 21; a step of forming an outer material 22 in which the integrated hole 27 is formed, when viewed from the distal end DE side in a longitudinal direction, the integrated hole 27 having the insertion area 25 in which the core material 21 is inserted, and the oil-hole area 26 that communicates with the insertion area 25; and a step of defining the oil hole 14, by inserting the core material 21 into the insertion area 25, by the outer periphery of the core material 21 inserted in the insertion area 25 and an edge of the oil-hole area 26 of the outer material 22.

With the above aspect, it is possible to dispose the opening of the oil hole accurately at a predetermined position and to reduce bending and winding of the oil hole on its way to the opening.

### (Aspect 10)

In Aspect 10, in the step of forming an outer material 22, the outer material 22 is formed by extrusion using a die 30, the die 30 includes an insertion pin 34 for forming the insertion area 25 and an oil-hole pin 35 for forming the oil-hole area 26, and the insertion pin 34 and the oil-hole pin 35 are connected.

With the above aspect, the rigidity of the oil-hole pin 35 can be improved.

### (Aspect 11)

The insertion pin 34 is formed so as to extend parallel to the longitudinal direction of the drilling tool 10, and the oil-hole pin 35 is formed so as to helically wind around the outer periphery of the insertion pin 34.

With the above aspect, the oil hole 14 of the drilling tool 10 can be formed helically along the longitudinal direction.

### Others

The above embodiment is intended to facilitate understanding of the present invention and is not intended to limit the interpretation of the present invention. Furthermore, the present invention can be modified or improved without departing from its purport and, of course, encompasses equivalents thereof.

### REFERENCE SIGNS LIST

10, 10A, 10B drilling tool
11 flute
12 cutting edge
13 flank
14, 19 oil hole
15 tapered portion
16 widened portion
17 outer periphery
18 center
20, 20X blank
21, 21A core material
22, 22B outer material
23 outer peripheral groove
24 marking portion
25 insertion area
26 oil-hole area
27 integrated hole
30, 30X die
31 extrusion portion
32 groove forming portion
33 integrated hole pin
33X hole pin
34 insertion pin
35 oil-hole pin
36 powder

## Claims

1. A drilling tool comprising:
a core material; and
an outer material located around the core material,
an integrated hole being formed in the outer material,
when viewed from a distal end side in a longitudinal direction, the integrated hole having:
an insertion area in which the core material is inserted; and
an oil-hole area that communicates with the insertion area,
an oil hole being defined by an outer periphery of the core material inserted in the insertion area and an edge of the oil-hole area of the outer material.

2. The drilling tool according to Claim 1, wherein
the core material and the outer material are respectively made of materials that are different from each other.

3. The drilling tool according to Claim 1, wherein
the oil hole is formed helically along the longitudinal direction.

4. The drilling tool according to Claim 1, wherein
the oil hole has a tapered portion in which a width of the oil hole narrows from the outer periphery toward a center when viewed from the distal end side in the longitudinal direction.

5. The drilling tool according to Claim 4, wherein
the oil hole has a widened portion
that is located closer to the center than the tapered portion is when viewed from the distal end side in the longitudinal direction, and
in which the width of the oil hole widens toward the center when viewed from the distal end side in the longitudinal direction.

6. The drilling tool according to Claim 1, wherein
a plurality of the oil holes are provided, and
the plurality of oil holes are positioned so as to be rotationally symmetric about a center when viewed from the distal end side in the longitudinal direction.

7. The drilling tool according to Claim 1, wherein
the core material has another oil hole.

8. A blank for a drilling tool, the blank comprising:
a core material; and
an outer material located around the core material,
an integrated hole being formed in the outer material,
when viewed from a distal end side in a longitudinal direction, the integrated hole having:
an insertion area in which the core material is inserted, and
an oil-hole area that communicates with the insertion area,
an oil hole being defined by an outer periphery of the core material inserted in the insertion area and an edge of the oil-hole area of the outer material.

9. A manufacturing method for a blank for a drilling tool, the manufacturing method comprising:
a step of forming a core material;
a step of forming an outer material in which an integrated hole is formed,
when viewed from a distal end side in a longitudinal direction, the integrated hole having
an insertion area in which the core material is inserted, and
an oil-hole area that communicates with the insertion area; and
a step of defining an oil hole, by inserting the core material into the insertion area, by an outer periphery of the core material inserted in the insertion area and an edge of the oil-hole area of the outer material.

10. The manufacturing method for a blank for a drilling tool according to Claim 9, wherein
in the step of forming an outer material, the outer material is formed by extrusion using a die,
the die includes
an insertion pin for forming the insertion area and
an oil-hole pin for forming the oil-hole area, and
the insertion pin and the oil-hole pin are connected.

11. The manufacturing method for a blank for a drilling tool according to Claim 10, wherein
the insertion pin is formed so as to extend parallel to the longitudinal direction of the drilling tool, and
the oil-hole pin is formed so as to helically wind around an outer periphery of the insertion pin.
